# EUROPEAN PATENT SPECIFICATION

(11) **EP 1 819 783 B1**
(45) Date of publication and mention of the grant of the patent: **07.10.2009**
(21) Application number: 05817824.5
(22) Date of filing: 24.11.2005
(51) Int. Cl.: C09D 7/14, C09B 67/00, C09D 5/02

(54) **SPECIAL EFFECT PAINT SET**
EFFEKTFARBENKOMBINATION
ENSEMBLE DE PEINTURE A EFFET SPECIAL

(30) Priority: 24.11.2004 FI 20041513
(43) Date of publication of application: 22.08.2007
(73) Proprietor: Tikkurila Oy, 01300 Vantaa (FI)
(72) Inventor: FRERA, Laura, I-IT-40138 Bologna (IT)
(74) Representative: Träskman, Berndt Hilding
(86) International application number: PCT/FI2005/000502
(87) International publication number: WO 2006/056644

(56) References cited:
- US-A- 5 672 649
- US-A- 5 672 649
- US-A- 5 897 698
- US-A- 5 897 698
- US-A1- 2003 177 951
- US-B2- 6 676 742

## Description

The present invention relates to a set of mutually compatible water-based paint components for forming a water-based paint at the point of sale or at the distribution center, which set includes at least a binder paint component.

This set of water-based paint components is especially intended to be dispensed by a dispensing machine, producing in this way paints having different characteristics in terms of quality, performance, aesthetical and visual results. The invention also relates to a component in a set of water-based components for forming a water-based paint, the set including at least a binder paint component and a thickener paint component. Further, the invention relates to a process for forming a water-based paint by providing a set of compatible water-based paint components including at least a binder paint component and a thickener paint component and contacting at least two of the water-based paint components.

In the component mixing method, presented by Carola Grundfelt-Forsius in 1997 (Färg och Lack, 1997, 43, 5, 6), the previously used base paints (usually only two) are divided into further components, which are responsible for gloss, weather resistance or colour depth. See also WO 01/60931 A2, which calls the paint components prepaints.

Special effect paints are known to give visual effects differing from the properties of standard paints. Typical effects are the "pearlescent" effect, giving the film mother-of-pearl appearance, the metal effect, giving metal reflection through the film, the iridescent effect, giving different colours depending on the visual angle, the textural effect, revealing a coarse pattern through or on the film, and velvet effect, giving a smooth velvet appearance.

Traditionally, to get e.g. a pearlescent effect on the wall, it has been necessary to apply first a coat of paint having the right absorption degree, and then apply upon that the pearlescent pigment paint. To get the final result was thus exceptionally complicated and costly for the retailer, who had to keep in stock every specific combination of basecoat paint and special effect surface paint.

Now, the problem resulting from using a separate basecoat and a special effect surface paint has essentially been solved by means of a set of compatible water-based paint components for forming a water-based paint at the point of sale, distribution or application, which set includes at least a binder paint component. Characteristic for the set is that it further includes a thickener paint component and at least one special effect paint component containing a special effect pigment. By applying the above component system in this way to special effect paints, the disadvantage of retailing a large stock of basecoat and surface paints has been removed.

The present set of water-based paints is especially intended to be dispensed by a dispensing machine, producing in this way special effect paints directly at the point of sale and distribution. The water-based paint formed by the claimed set is preferably a decorative architectural paint.

By "pigment" is in the present invention meant any finely divided, insoluble powder which imparts special properties to the paint, e.g. colour, including black and white, smoothness, hardness, roughness, optical effect, etc.

The special effect pigment can be of any kind, such as a pearlescent pigment, a metallic pigment, an iridescent pigment, a texture pigment, and a velvet touch giving pigment. Preferably, the special effect paint component contains, most preferably consists essentially of, from 10 to 50% by weight of said special effect pigment, from 1.0 to 10% by weight of a suspending agent selected from a thickening agent and an anti-settling agent, and from 40 to 70% by weight of water. This composition ensures the stability of the component, which otherwise would be difficult to attain with the comparably high concentration of special effect pigment.

The special effect paint component preferably contains less than 1 % by weight, most preferably less than 0.5 % by weight, of binder. The special effect paint component, and preferably also the binder and thickener paint components, preferably contains less than 5 % by weight, most preferably less than 1 % by weight, of organic solvent

Most preferably, the special effect paint component contains from 1.0 to 3.0% by weight of said thickening agent and from 0.5 to 3.0% by weight of said anti-settling agent.

In addition to the special effect pigment, the suspending agent(s) and the water, the special effect paint component may also contain other ingredients. Such ingredients are e.g. smaller amounts of binders, opacifying agents and pigment extenders, defoaming agents, coalescents, plasticizers, wetting agents, non-thickening rheology modifiers, driers, anti-skinning agents, surfactants (including dispersants) and biocides (including mildewcides). Preferably, the special effect paint contains one or more ingredients selected from of from 1.0 to 3.0% by weight of a wetting agent, from 0.1 to 1.5% by weight of a defoaming agent, from 0.1 to 1.0% by weight of a biocide.

When the special effect pigment is selected from the group consisting of said pearlescent pigment, said metallic pigment, said iridescent pigment, and said texture pigment, the special effect paint component preferably contains from 1.0 to 3.0% by weight of a dispersant. When the special effect pigment is selected from the group consisting of said pearlescent pigment, said iridescent pigment, said texture pigment, and a said velvet touch giving pigment, the claimed special effect paint component preferably contains from 0.05 to 0.5% by weight of a pH regulating agent.

Further, when the special effect pigment is selected from the group consisting of said pearlescent pigment, said metallic pigment and said iridescent pigment, the special effect paint component preferably contains from 20 to 40% by weight of the special effect pigment. If the special effect pigment is selected from the group consisting of said texture pigment and said velvet touch giving pigment, the special effect paint component preferably contains a little less, i.e. from 10 to 30% by weight, of the special effect pigment.

The pearlescent pigment may be any pearlescent pigment known in the art. Preferably it consists essentially of particles of titanium dioxide coated mica. The metallic pigment may also be any metallic pigment known in the art. Preferably, it consists essentially of stainless steel flakes or aluminium particles.

The texture pigment may consist of any solid material giving raise to a textured appearance. Preferably it consists essentially of coarse size filler, e.g. quartz and calcium carbonate. The particle size of the coarse particles may e.g. be 100 to 300 µm.

The velvet touch pigment preferably consist essentially of extremely light filler, e.g. glass bubbles or microspheres having e.g. a bulk density of 30 to 50 kg/m³ and a particle diameter of 20 to 80 µm.

As was said above, the effect paint component may contain a pigment suspending agent selected from a thickening agent and an anti-settling agent.

It is preferred to select the thickening agent of said special effect paint component from the group consisting of a polyvinyl alcohol, a hydrophobically modified alkali soluble (HASE) emulsion, an alkali soluble or swellable emulsion (ASE) emulsion, a modified ethylene oxide-urethane polymer (HEUR), and a cellulose ether based thickener. Most preferably, the thickening agent is selected from the group consisting of said hydrophobically modified alkali soluble (HASE) emulsion, said alkali soluble or swellable emulsion (ASE) emulsion, said modified ethylene oxide-urethane polymer (HEUR), and said cellulose ether based thickener.

The anti-settling agent of said special effect paint component is preferably selected from the group consisting of fumed silica, attapulgite clay, synthetic colloidal clay, and titanate chelating agents. Most preferably, the anti-settling agent is synthetic colloidal clay.

As was stated above, the claimed set of compatible water-based paint components for forming a water-based paint includes at least a binder paint component, a thickener paint component and the above described special effect paint component.

According to a preferred embodiment of the invention, the binder paint component of the claimed set contains from 80 to 99% by weight of a binder and 20 to 1% by weight of water. Naturally, it may also contain other substances, such as pH regulating agents, biocides, etc.

According to a preferred embodiment of the invention, the binder paint component of the claimed set contains from 0.05 to 0.5% by weight of a pH regulating agent, preferably selected from ammonium compounds and amino compounds such as amino alcohols.

The binder of the binder paint component may be a latex (a stable, fine dispersion of synthetic polymer in water), a thermoplastic polymer or a thermosetting polymer. Most typically it is a latex polymeric binder selected from the group consisting of acrylic homo- and copolymers, styrene-butadiene copolymers, and vinyl acetate homo- and copolymers. Such polymers are e.g. the polymers of acrylic and methacrylic acid and their esters (the acrylic polymers), styrene-acrylic copolymers, polyvinyl acetate, the styrene-butadiene copolymers and their derivatives, vinyl acetate-acrylic copolymers, ethylene-vinyl acetate copolymers, vinyl acetate-maleate copolymers, vinyl acetate-vinyl chloride-acrylic terpolymers, ethylene-vinyl acetate-acrylic terpolymers and urethane polymers. Most preferably, the binder polymer used in the binder paint component of the invention is a styrene-acrylic copolymer.

In the claimed set, the thickener paint component preferably contains from 5 to 20% by weight of a thickening agent and from 95 to 80% by weight of water. The thickener agent is a material which modifies the rheological profile of the final water-based paint. Suitable thickening agents are hydrophobically modified alkali soluble emulsions (HASE), alkali soluble or swellable emulsions (ASE), polyvinyl alcohol (PVA), modified ethylene oxide-urethane polymers (HEUR), hydroxymethyl cellulose (HMC), hydroxyethyl cellulose (HEC), hydrophobically modified hydroxyethyl cellulose (HMHEC), sodium carboxymethyl cellulose (SCMC), sodium carboxymethyl-2-hydroxyethyl cellulose, and the 2-hydroxy-C₂-C₄-alkyl celluloses. Preferably the thickening agent is selected from the group consisting of HASE, ASE, HEUR and said cellulose ether thickeners.

Further the claimed set of compatible water-based paint components may include one or several gloss-regulating paint components. Typically the gloss-regulating paint component is used in different quantities to give the final water-based paint the right gloss, such as high gloss, semi gloss, semi matt, and matt. According to one embodiment of the invention, the gloss regulating paint component is a matt component. The matt component preferably contains a mixture of different type of fillers which make the film of the paint matt. According to another embodiment of the invention, the gloss regulating paint component is a non-matt component. Then, the non-matt component preferably contains kaolin particles, which make the film of the paint satin-like or glossy. Most preferably, the set includes both a matt and non-matt component by which any gloss of the paint can be achieved.

In some cases, e.g. when textured and velvet paints are to be prepared, the claimed set may include an opacifying paint component. Typically, such an opacifying paint component contains an opacifying pigment and water. Other typical components are dispersant(s) and thickener(s). The opacifying pigment is for instance selected from the group consisting of titanium dioxide, zinc dioxide, lead oxide and a synthetic polymer pigment. Preferably, the opacifying pigment is titanium oxide or a mixture thereof.

Naturally, the set may also include paint components or pastes containing normal pigments such as colour pigments.

In addition to the above described set of mutually compatible water-based paint components for forming a water-based paint, the invention also relates to a component in such a set. Characteristic of the invention is that the component is a special effect paint component containing a special effect pigment. Typically, the special effect pigment is selected from the group consisting of a pearlescent pigment, a metallic pigment, an iridescent pigment, a texture pigment, and a velvet touch giving pigment.

The special effect paint component typically contains from 10 to 50% by weight of said special effect pigment, from 1.0 to 10% by weight of a pigment suspending agent selected from the group consisting of a thickening agent and an anti-settling agent, and from 40 to 70% by weight of water. It preferably contains from 1.0 to 3.0% by weight of said thickening agent and from 0.5 to 3.0% by weight of said anti-settling agent. The rest of the properties of the special effect paint component according to the invention are described above.

Finally, the invention relates to a process for forming a water-based paint by providing a set of compatible water-based paint components including at least a binder paint component and a thickener paint component and contacting at least two of the water-based paint components. In the process, at least one special effect paint component containing a special effect pigment is provided and contacted. The special effect pigment is preferably selected from the group consisting of a pearlescent pigment, a metallic pigment, an iridescent pigment, a texture pigment, and a velvet pigment.

Typically, the special effect paint component contains from 10 to 50% by weight of said special effect pigment, from 1.0 to 10% by weight of a pigment suspending agent selected from a thickening agent and an anti-settling agent, and from 40 to 70% by weight of water. Preferably, the special effect paint component contains from 1.0 to 3.0% by weight of said thickening agent and from 0.5 to 3.0% by weight of said anti-settling agent. The special effect paint component may also contain one or more agents selected from of from 1.0 to 3.0% by weight of a wetting agent, from 0.1 to 1.5% by weight of a defoaming agent, and from 0.1 to 1.0% by weight of a biocide.

The rest of the technical features of the special effect paint component are given above in connection with the description of the set of compatible water-based paint components. Also, the binder paint component and the thickener paint component, as well as the optional gloss regulating component and opacifying component are described above in connection with said set.

When preparing a water-based paint according to the invention, it is preferred that from 5 to 50% by weight, based on the total weight of the water-based paint, of said binder paint component is contacted. 5 to 40% by weight, based on the total weight of the water-based paint, of said thickener paint component is preferably contacted.

When the special effect pigment is selected from the group consisting of said pearlescent pigment, said metallic pigment, and said texture pigment, from 10 to 50% by weight, based on the total weight of the water-based paint, of said gloss regulating paint component is preferably contacted. Then, an amount of additional water (in addition to the water in the paint components) is preferably contacted which is from 1 to 20% by weight of the final paint. The pearlescent and metal pigments usually require the use of a non-matt paint component. This component is usually based on kaolin, see above, which gives the final paint a satin-like or glossy appearance. However, the amount of kaolin must not be such as to cover the pearlescent or metal effect.

When the special effect pigment is selected from the group consisting of said texture pigment and said velvet pigment, from 5 to 20% by weight of said opacifying paint component is preferably contacted. In the following, a few examples are presented, the mere purpose of which are to illustrate the instant invention.

Finally, the invention relates to the use of the above described set or special effect component for the preparation of a water based paint at the point of sale, distribution or application. Preferably, the water based paint is a decorative architectural paint.

### Examples

### Available materials

The tested system is composed by 5 "standard" components plus water.
1. MC: matt component containing a mix of different fillers. It assures the matt nature of the paints.
2. NMC: not matt component. This ingredient, kaolin based, doesn't decrease the gloss, allowing us to get satin and gloss paints.
3. WP: white component, containing titanium dioxide.
4. Binder: a styrol-acrylic one, suitable for both matt and gloss formulation.
5. TS: thickening solution. A mix of different thickening agents (cellulose based, acrylic and polyurethane).

Special components can be added to the mentioned above ones, components containing special pigments or very specific fillers, assuring to the paints particular aspects.

### The special effect paints components prepared were:

### Pearlescent - Iridescent component

| | | |
|---|---|---|
| Water | 46.1000 | 40-50 |
| Anti-settling agent | 1.0000 | 0.5-1.5 |
| Thickening agent | 2.0000 | 1.5-2.5 |
| pH modulator | 0.1000 | 0.1-0.2 |
| Defoamer | 0.4500 | 0.1-0.5 |
| Wetting agent | 1.0000 | 0.5-1.5 |
| Dispersant | 2.0000 | 1.5-2.5 |
| Special Effect Pigment | 30.0000 | 20-40 |
| Water | 16.7000 | 10-20 |
| Biocide | 0.2000 | 0.1-0.3 |
| Defoamer | 0.4500 | 0.1-0.5 |

### Metallic Pigment Component

| | | |
|---|---|---|
| Water | 46.1000 | 40-50 |
| Anti-settling agent | 1.0000 | 0.5-1.5 |
| Thickening agent | 2.0000 | 1.5-2.5 |
| Defoamer | 0.4500 | 0.1-0.5 |
| Wetting agent | 1.0000 | 0.5-1.5 |
| Dispersant | 2.0000 | 1.5-2.5 |
| Metal paste | 30.0000 | 20-40 |
| Water | 16.7000 | 10-20 |
| Biocide | 0.2000 | 0.1-0.3 |
| Defoamer | 0.4500 | 0.1-0.5 |

### Textured Component

| | | |
|---|---|---|
| Water | 44.0500 | 40-50 |
| Anti-settling agent | 1.5000 | 0.5-1.5 |
| Thickening agent | 2.5000 | 1.5-2.5 |
| pH modulator | 0.2500 | 0.1-0.2 |
| Dispersant | 2.0000 | 1.5-2.5 |
| Wetting agent | 2.0000 | 1.5-2.5 |
| Defoamer | 0.2500 | 0.1-0.5 |
| Coarse size filler | 20.0000 | 10-30 |
| Water | 27.0000 | 20-30 |
| Defoamer | 0.2500 | 0.1-0.5 |
| Biocide | 0.2000 | 0.1-0.3 |

### Velvet Touch Component

| | | |
|---|---|---|
| Water | 46.10 | 40-50 |
| Anti-settling agent | 1.00 | 0.5-1.5 |
| Thickening agent | 2.00 | 1.5-2.5 |
| pH modulator | 0.10 | 0.1-0.2 |
| Wetting agent | 2.00 | 1.5-2.5 |
| Defoamer | 0.25 | 0.1-0.5 |
| Light filler | 15.00 | 10-30 |
| Water | 15.00 | 10-30 |
| Defoamer | 0.50 | 0.1-0.5 |
| Biocide | 0.20 | 0.1-0.3 |

All these components have showed to be stable.

### Preparation of the final paint

When preparing final paints from these special paints, it is necessary to understand that these special pigments can very easily loose their specific light reflection by the presence, in the same formula, of common filler (calcium carbonate, Blanc fixe, talcum; titanium dioxide) can cover the final effect as well. Of course, this depends on the amount of these fillers, but usually to get a good result it is necessary to work with a much-reduced amount of "solid" in the recipe. In other words it is necessary to avoid some other ingredients that can hide the special pigments.

The essential point in this formulation is the ratio between the component NMC (not matt component) and the components containing the special pigments. NMC is based on kaolin, a filler that can precerve the gloss in the final formulation. It is used as an extender for TiO₂.

Finding the right ratio you can have some solid content in the final paint (that helps to get an even application) without disturbing the "shiny" nature of the pigment.

Another point is of course the thickening component (TS). This is made by mixing thickening agents providing different features. And so we have a polyurethane one to improve the levelling, an acrylic one to enhance the film thickness and a cellulosic one to help the stability in can.

No compatibility problems were found between all the components included in our system. The following recipes gave good results:

### Peartescent Paint formula (w/w): tintable to get the desired shades

| | |
|---|---|
| NMC | 15 |
| Pearl component | 25 |
| Binder | 20 |
| TS | 30 |
| Water | 10 |

### Metal Paint formula (w/w)

| | |
|---|---|
| NMC | 20 |
| Metal component | 20 |
| Binder | 20 |
| TS | 30 |
| Water | 10 |

### Textured Paint formula (w/w): tintable to get the desired shades

| | |
|---|---|
| MC | 40 |
| Textured component | 20 |
| WP | 15 |
| Binder | 10 |
| TS | 10 |
| Water | 5 |

### Velvet Touch Paint formula (w/w): tintable to get the desired shades

| | |
|---|---|
| Light Filler component | 45 |
| WP | 10 |
| Binder | 35 |
| TS | 10 |

Using the components already developed we got an excellent formulation, suitable to be applied by roller with an homogenous result, preserving the final specific appearance coming from the special pigments.

## Claims

1. A set of compatible water-based paint components for forming a water-based paint at the point of sale, distribution or application, the set including at least a binder paint component, **characterized in that** the set further includes a thickener paint component and at least one special effect paint component consisting essentially of from 10 to 50% by weight of a special effect pigment, from 1.0 to 10% by weight of a pigment suspending agent selected from a thickening agent and an anti-settling agent, from 40 to 70% by weight of water, and less than 1.0% by weight of a binder.

2. A set according to claim 1, **characterized in that** said water-based paint is a decorative architectural paint.

3. A set according to claim 1 or 2, **characterized in that** said special effect pigment is selected from the group consisting of a pearlescent pigment, a metallic pigment, an iridescent pigment, a texture pigment, and a velvet pigment.

4. A set according to claim 1, 2 or 3, **characterized in that** said special effect paint component contains less than 0.5% by weight, of binder.

5. A set according to any one of the preceding claims, **characterized in that** said special effect paint component, and preferably also the binder and thickener paint components, contain less than 5 % by weight, preferably less than 1 % by weight, of organic solvent.

6. A set according to any one of the preceding claims, **characterized in that** said special effect paint component contains from 1.0 to 3.0% by weight of said thickening agent and from 0.5 to 3.0% by weight of said anti-settling agent.

7. A set according to any one of the preceding claims, **characterized in that** said special effect paint component also contains one or more agents selected from of from 1.0 to 3.0% by weight of a wetting agent, from 0.1 to 1.5% by weight of a defoaming agent, from 0.1 to 1.0% by weight of a biocide.

8. The set according to any one of claims 1 to 7, **characterized in that** said special effect pigment is selected from the group consisting of said pearlescent pigment, said metallic pigment, said iridescent pigment, and said texture pigment, and that said special effect paint component contains from 1.0 to 3.0% by weight of a dispersant.

9. The set according to any one of claims 1 to 7, **characterized in that** said special effect pigment is selected from the group consisting of said pearlescent pigment, said iridescent pigment, said texture pigment, and a said velvet pigment, and that said special effect paint component contains from 0.05 to 0.5% by weight of a pH regulating agent.

10. The set according to any one of claims 1 to 7, **characterized in that** said special effect pigment is selected from the group consisting of said pearlescent pigment, said metallic pigment and said iridescent pigment, and that said special effect paint component contains from 20 to 40% by weight of the special effect pigment.

11. The set according to any one of claims 1 to 7, **characterized in that** said special effect pigment is selected from the group consisting of said texture pigment and said velvet pigment, and that said special effect paint component contains from 10 to 30% by weight of the special effect pigment.

12. The set according to any one of claims 1 to 10, **characterized in that** said pearlescent pigment consists essentially of particles of titanium dioxide coated mica.

13. The set according to any one of claims 1 to 8 and 10, **characterized in that** said metallic pigment consists essentially of stainless steel flakes.

14. The set according to any one of claims 1-9 and 11, **characterized in that** said texture pigment consists essentially of coarse size filler particles.

15. The set according to claim 14, **characterized in that** said coarse size filler particles have a size of 100-300 µm.

16. The set according to any one of claims 1 to 7, 9 and 11, **characterized in that** said velvet pigment consist essentially of extremely light filler particles.

17. The set according to claim 16, **characterized in that** said extremely light filler particles have a bulk density of 30-50 kg/m³ and a particle diameter of 20 to 80 µm.

18. The set according to any one of claims 1 to 17, **characterized in that** the thickening agent of said special effect paint component is selected from the group consisting of a polyvinyl alcohol, a hydrophobically modified alkali soluble (HASE) emulsion, an alkali soluble or swellable emulsion (ASE) emulsion, a modified ethylene oxide-urethane polymer (HEUR), and a cellulose ether based thickener.

19. The set according to claim 18, **characterized in that** said thickening agent is selected from the group consisting of said hydrophobically modified alkali soluble (HASE) emulsion, said alkali soluble or swellable emulsion (ASE) emulsion, said modified ethylene oxide-urethane polymer (HEUR), and said cellulose ether based thickener.

20. The set according to any of claims 1 to 19, **characterized in that** the anti-settling agent of said special effect paint component is selected from the group consisting of fumed silica, attapulgite clay, synthetic colloidal clay, and titanate chelating agents.

21. The set according to claim 20, **characterized in that** said anti-settling agent is synthetic colloidal clay.

22. The set according to any one of claims 1 to 21, **characterized in that** the thickener paint component of said set contains from 5 to 20% by weight of a thickening agent and from 95 to 80% by weight of water.

23. The set according to claim 22, **characterized in that** said thickening agent is selected from the group consisting of a polyvinyl alcohol, a hydrophobically modified alkali soluble (HASE) emulsion, an alkali soluble or swellable emulsion (ASE) emulsion, a modified ethylene oxide-urethane polymer (HEUR), and a cellulose ether based thickener.

24. The set according to claim 23, **characterized in that** said thickening agent is selected from the group consisting of said hydrophobically modified alkali soluble (HASE) emulsion, said alkali soluble or swellable emulsion (ASE) emulsion, said modified ethylene oxide-urethane polymer (HEUR), and said cellulose ether based thickener.

25. The set according to any one of claims 1 to 24, **characterized in that** said binder paint component of said set contains from 80 to 99% by weight of a binder and 20 to 1 % by weight of water.

26. The set according to claim 25, **characterized in that** said binder is selected from the group consisting of water-born latex polymers.

27. The set according to claim 26, **characterized in that** said water-born latex polymers are selected from the group consisting of acrylic homo- and copolymers, styrene-butadiene copolymers, and vinyl acetate homo- and copolymers.

28. The set according to claim 27, **characterized in that** said water-born latex polymer is a styrene-acrylic copolymer.

29. The set according to any one of claims 1 to 28, **characterized in that** said binder paint component contains from 0.05 to 0.5% by weight of a pH regulating agent selected from ammonium and amino compounds, preferably from amino alcohols.

30. The set according to any one of claims 1 to 29, **characterized in that** it includes one or several gloss regulating paint components.

31. The set according to claim 30, **characterized in that** one gloss regulating paint component is a matt component.

32. The set according to claim 31, **characterized in that** the matt component contains a mixture of different type of fillers which make the film of the paint matt.

33. The set according to claim 30, **characterized in that** one gloss regulating paint component is a non-matt component.

34. The set according to claim 33, **characterized in that** the non-matt component contains kaolin particles, which make the film of the paint satin-like or glossy.

35. The set according to any one of claims 1-34, **characterized in that** it includes an opacifying paint component, which contains an opacifying pigment and water.

36. The set according to claim 35, **characterized in that** said opacifying pigment is selected from the group consisting of titanium dioxide, zinc dioxide, lead oxide and a synthetic polymer pigment.

37. The set according to claim 36, **characterized in that** said opacifying pigment is titanium oxide or a mixture thereof.

38. Process for forming a water-based paint by providing a set according to any one of claims 1 to 37 and contacting at least two of the set's water-based paint components at the point of sale, distribution or application, **characterized by** providing and contacting said thickener paint component and said at least one special effect paint component containing a special effect pigment.

39. Process according to claim 38, **characterized in that** said water-based paint components are dispensed by a dispensing machine.

40. The process according to claim 38 or 39, **characterized in that** from 5 to 50% by weight, based on the total weight of the water-based paint, of said binder paint component is contacted.

41. The process according to 38, 39 or 40, **characterized in that** from 5 to 40% by weight, based on the total weight of the water-based paint, of said thickener paint component is contacted.

42. The process according to any one of claims 38 to 41, **characterized in that** said special effect pigment is selected from the group consisting of said pearlescent pigment, said metallic pigment, and said texture pigment, and that from 10 to 50% by weight, based on the total weight of the water-based paint, of said gloss regulating paint component is contacted.

43. The process according to claim 42, **characterized in that** from 1 to 20% by weight of water is separately contacted.

44. The process according to 38, 39 or 40, **characterized in that** said special effect pigment is selected from the group consisting of said texture pigment and said velvet pigment and that from 5 to 20% by weight of said opacifying paint component is contacted.

45. Use of the set according to any one of claims 1 to 37 for the preparation of a water based paint at the point of sale, distribution or application.

46. Use according to claim 45, **characterized in that** the water based paint is a decorative architectural paint.

## Patentansprüche

1. Set kompatibler, auf Wasser basierender Anstrichkomponenten zum Bilden eines auf Wasser basierenden Anstrichs zum Zeitpunkt des Verkaufs, des Vertriebs oder der Anwendung, wobei das Set mindestens eine Bindemittelanstrichkomponente beinhaltet, **dadurch gekennzeichnet, dass** das Set weiter eine Verdickeranstrichkomponente und mindestens eine Spezialeffektanstrichkomponente, bestehend im Wesentlichen aus von 10 bis 50 Gew.-% eines Spezialeffektpigments, von 1,0 bis 10 Gew.-% eines Pigmentsuspensionsmittels, ausgewählt aus einem Verdickungsmittel und einem Antiabsetzmittel, von 40 bis 70 Gew.-% Wasser und weniger als 1,0 Gew.-% eines Bindemittels, beinhaltet.

2. Set nach Anspruch 1, **dadurch gekennzeichnet, dass** der auf Wasser basierende Anstrich ein dekorativer architektonischer Anstrich ist.

3. Set nach Anspruch 1 oder 2, **dadurch gekennzeichnet, dass** das Spezialeffektpigment aus der Gruppe, bestehend aus einem Perleffektpigment, einem metallischen Pigment, einem irisierenden Pigment, einem Texturpigment und einem Samtpigment, ausgewählt ist.

4. Set nach Anspruch 1, 2 oder 3, **dadurch gekennzeichnet, dass** die Spezialeffektanstrichkomponente weniger als 0,5 Gew.-% Bindemittel enthält.

5. Set nach einem der vorhergehenden Ansprüche, **dadurch gekennzeichnet, dass** die Spezialeffektanstrichkomponente und bevorzugt auch die Bindemittel- und Verdickeranstrichkomponenten weniger als 5 Gew.-%, bevorzugt weniger als 1 Gew.-% organisches Lösungsmittel enthalten.

6. Set nach einem der vorhergehenden Ansprüche, **dadurch gekennzeichnet, dass** die Spezialeffektanstrichkomponente von 1,0 bis 3,0 Gew.-% des Verdickungsmittels und von 0,5 bis 3,0 Gew.-% des Antiabsetzmittels enthält.

7. Set nach einem der vorhergehenden Ansprüche, **dadurch gekennzeichnet, dass** die Spezialeffektanstrichkomponente auch eines oder mehrere Mittel, ausgewählt aus von 1,0 bis 3,0 Gew.-% eines Benetzungsmittels, von 0,1 bis 1,5 Gew.-% eines Entschäumungsmittels, von 0,1 bis 1,0 Gew.-% eines Biozids, enthält.

8. Set nach einem der Ansprüche 1 bis 7, **dadurch gekennzeichnet, dass** das Spezialeffektpigment aus der Gruppe, bestehend aus dem Perleffektpigment, dem metallischen Pigment, dem irisierenden Pigment und dem Texturpigment, ausgewählt ist, und dass die Spezialeffektanstrichkomponente von 1,0 bis 3,0 Gew.-% eines Dispergiermittels enthält.

9. Set nach einem der Ansprüche 1 bis 7, **dadurch gekennzeichnet, dass** das Spezialeffektpigment aus der Gruppe, bestehend aus dem Perleffektpigment, dem irisierenden Pigment, dem Texturpigment und dem Samtpigment, ausgewählt ist, und dass die Spezialeffektanstrichkomponente von 0,05 bis 0,5 Gew.-% eines pH-Regulierungsmittels enthält.

10. Set nach einem der Ansprüche 1 bis 7, **dadurch gekennzeichnet, dass** das Spezialeffektpigment aus der Gruppe, bestehend aus dem Perleffektpigment, dem metallischen Pigment und dem irisierenden Pigment, ausgewählt ist, und dass die Spezialeffektanstrichkomponente von 20 bis 40 Gew.-% des Spezialeffektpigments enthält.

11. Set nach einem der Ansprüche 1 bis 7, **dadurch gekennzeichnet, dass** das Spezialeffektpigment aus der Gruppe, bestehend aus dem Texturpigment und dem Samtpigment, ausgewählt ist, und dass die Spezialeffektanstrichkomponente von 10 bis 30 Gew.-% des Spezialeffektpigments enthält.

12. Set nach einem der Ansprüche 1 bis 10, **dadurch gekennzeichnet, dass** das Perleffektpigment im Wesentlichen aus Teilchen aus mit Titandioxid beschichtetem Mika besteht.

13. Set nach einem der Ansprüche 1 bis 8 und 10, **dadurch gekennzeichnet, dass** das metallische Pigment im Wesentlichen aus Edelstahlflocken besteht.

14. Set nach einem der Ansprüche 1 bis 9 und 11, **dadurch gekennzeichnet, dass** das Texturpigment im Wesentlichen aus grobkörnigen Füllstoffteilchen besteht.

15. Set nach Anspruch 14, **dadurch gekennzeichnet, dass** die grobkörnigen Füllstoffteilchen eine Größe von 100 bis 300 µm aufweisen.

16. Set nach einem der Ansprüche 1 bis 7, 9 und 11, **dadurch gekennzeichnet, dass** das Samtpigment im Wesentlichen aus extrem leichten Füllstoffteilchen besteht.

17. Set nach Anspruch 16, **dadurch gekennzeichnet, dass** die extrem leichten Füllstoffteilchen eine Schüttdichte von 30 bis 50 kg/m³ und einen Teilchendurchmesser von 20 bis 80 µm aufweisen.

18. Set nach einem der Ansprüche 1 bis 17, **dadurch gekennzeichnet, dass** das Verdickungsmittel der Spezialeffektanstrichkomponente aus der Gruppe, bestehend aus einem Polyvinylalkohol, einer hydrophob modifizierten alkalilöslichen Emulsion (HASE), einer alkalilöslichen oder quellbaren Emulsion (ASE), einem modifizierten Ethylenoxid-Urethanpolymer (HEUR) und einem auf Celluloseether basierenden Verdicker, ausgewählt ist.

19. Set nach Anspruch 18, **dadurch gekennzeichnet, dass** das Verdickungsmittel aus der Gruppe, bestehend aus der hydrophob modifizierten alkalilöslichen Emulsion (HASE), der alkalilöslichen oder quellbaren Emulsion (ASE), dem modifizierten Ethylenoxid-Urethanpolymer (HEUR) und dem auf Celluloseether basierenden Verdicker, ausgewählt ist.

20. Set nach einem der Ansprüche 1 bis 19, **dadurch gekennzeichnet, dass** das Antiabsetzmittel der Spezialeffektanstrichkomponente aus der Gruppe, bestehend aus Quarzstaub, Attapulgitton, synthetischem kolloidalem Ton und Titanat-chelatisierenden Mitteln, ausgewählt ist.

21. Set nach Anspruch 20, **dadurch gekennzeichnet, dass** das Antiabsetzmittel synthetischer kolloidaler Ton ist.

22. Set nach einem der Ansprüche 1 bis 21, **dadurch gekennzeichnet, dass** die Verdickeranstrichkomponente des Sets von 5 bis 20 Gew.-% eines Verdikkungsmittels und von 95 bis 80 Gew.-% Wasser enthält.

23. Set nach Anspruch 22, **dadurch gekennzeichnet, dass** das Verdickungsmittel aus der Gruppe, bestehend aus einem Polyvinylalkohol, einer hydrophob modifizierten alkalilöslichen Emulsion (HASE), einer alkalilöslichen oder quellbaren Emulsion (ASE), einem modifizierten Ethylenoxid-Urethanpolymer (HEUR) und einem auf Celluloseether basierenden Verdicker, ausgewählt ist.

24. Set nach Anspruch 23, **dadurch gekennzeichnet**, das dass Verdickungsmittel aus der Gruppe, bestehend aus der hydrophob modifizierten alkalilöslichen Emulsion (HASE), der alkalilöslichen oder quellbaren Emulsion (ASE), dem modifizierten Ethylenoxid-Urethanpolymer (HEUR) und dem auf Celluloseether basierenden Verdicker, ausgewählt ist.

25. Set nach einem der Ansprüche 1 bis 24, **dadurch gekennzeichnet, dass** die Bindemittelanstrichkomponente des Sets von 80 bis 99 Gew.-% eines Bindemittels und 20 bis 1 Gew.-% Wasser enthält.

26. Set nach Anspruch 25, **dadurch gekennzeichnet, dass** das Bindemittel aus der Gruppe, bestehend aus wassergetragenen Latexpolymeren, ausgewählt ist.

27. Set nach Anspruch 26, **dadurch gekennzeichnet, dass** die wassergetragenen Latexpolymere aus der Gruppe, bestehend aus Acrylhomo- und -copolymeren, Styrol-Butadien-Copolymeren und Vinylacetathomo- und -copolymeren, ausgewählt ist.

28. Set nach Anspruch 27, **dadurch gekennzeichnet, dass** das wassergetragene Latexpolymer ein Styrol-Acryl-Copolymer ist.

29. Set nach einem der Ansprüche 1 bis 28, **dadurch gekennzeichnet, dass** die Bindemittelanstrichkomponente von 0,05 bis 0,5 Gew.-% eines pH-Regulierungsmittels, ausgewählt aus Ammonium- und Aminoverbindungen, bevorzugt aus Aminoalkoholen, enthält.

30. Set nach einem der Ansprüche 1 bis 29, **dadurch gekennzeichnet, dass** es eine oder mehrere glanzregulierende Anstrichkomponenten beinhaltet.

31. Set nach Anspruch 30, **dadurch gekennzeichnet, dass** eine glanzregulierende Anstrichkomponente eine Mattkomponente ist.

32. Set nach Anspruch 31, **dadurch gekennzeichnet, dass** die Mattkomponente ein Gemisch verschiedener Arten von Füllstoffen enthält, welche den Anstrichfilm matt machen.

33. Set nach Anspruch 30, **dadurch gekennzeichnet, dass** eine glanzregulierende Anstrichkomponente eine Nicht-Mattkomponente ist.

34. Set nach Anspruch 33, **dadurch gekennzeichnet, dass** die Nicht-Mattkomponente Kaolinteilchen enthält, welche den Anstrichfilm seidenartig oder glänzend machen.

35. Set nach einem der Ansprüche 1 bis 34, **dadurch gekennzeichnet, dass** es eine Deck-Anstrichkomponente beinhaltet, welche ein Deckpigment und Wasser enthält.

36. Set nach Anspruch 35, **dadurch gekennzeichnet, dass** das Deckpigment aus der Gruppe, bestehend aus Titandioxid, Zinkdioxid, Bleioxid und einem synthetischen Polymerpigment, ausgewählt ist.

37. Set nach Anspruch 36, **dadurch gekennzeichnet, dass** das Deckpigment Titanoxid oder ein Gemisch davon ist.

38. Verfahren zur Bildung eines auf Wasser basierenden Anstrichs durch das Bereitstellen eines Sets nach einem der Ansprüche 1 bis 37 und das Inkontaktbringen mindestens zweier der auf Wasser basierenden Anstrichkomponenten des Sets zum Zeitpunkt des Verkaufs, des Vertriebs oder der Anwendung, **gekennzeichnet durch** das Bereitstellen und Inkontaktbringen der Verdickeranstrichkomponente und der mindestens einen Spezialeffektanstrichkomponente, die ein Spezialeffektpigment enthält.

39. Verfahren nach Anspruch 38, **dadurch gekennzeichnet, dass** die auf Wasser basierenden Anstrichkomponenten von einer Zubereitungsmaschine zubereitet werden.

40. Verfahren nach Anspruch 38 oder 39, **dadurch gekennzeichnet, dass** von 5 bis 50 Gew.-%, basierend auf dem Gesamtgewicht des auf Wasser basierenden Anstrichs, der Bindemittelanstrichkomponente inkontaktgebracht werden.

41. Verfahren nach Anspruch 38, 39 oder 40, **dadurch gekennzeichnet, dass** von 5 bis 40 Gew.-%, basierend auf dem Gesamtgewicht des auf Wasser basierenden Anstrichs, der Verdickeranstrichkomponente inkontaktgebracht werden.

42. Verfahren nach einem der Ansprüche 38 bis 41, **dadurch gekennzeichnet, dass** das Spezialeffektpigment aus der Gruppe, bestehend aus dem Perleffektpigment, dem metallischen Pigment und dem Texturpigment, ausgewählt ist, und dass von 10 bis 50 Gew.-%, basierend auf dem Gesamtgewicht des auf Wasser basierenden Anstrichs, der glanzregulierenden Anstrichkomponente inkontaktgebracht werden.

43. Verfahren nach Anspruch 42, **dadurch gekennzeichnet**, das von 1 bis 20 Gew.-% Wasser getrennt inkontaktgebracht werden.

44. Verfahren nach Anspruch 38, 39 oder 40, **dadurch gekennzeichnet, dass** das Spezialeffektpigment aus der Gruppe, bestehend aus dem Texturpigment und dem Samtpigment, ausgewählt ist, und dass von 5 bis 20 Gew.-% der Deck-Anstrichkomponente inkontaktgebracht werden.

45. Verwendung des Sets nach einem der Ansprüche 1 bis 37 für die Herstellung eines auf Wasser basierenden Anstrichs zum Zeitpunkt des Verkaufs, des Vertriebs oder der Anwendung.

46. Verwendung nach Anspruch 45, **dadurch gekennzeichnet, dass** der auf Wasser basierende Anstrich ein dekorativer architektonischer Anstrich ist.

## Revendications

1. Ensemble de composants de peinture à base d'eau compatibles utilisé pour former une peinture à base d'eau au point de vente, de distribution ou d'application, l'ensemble comprenant au moins un composant de peinture de type liant, **caractérisé en ce que** l'ensemble comprend en outre un composant de peinture de type épaississant et au moins un composant de peinture à effet spécial, constitué essentiellement de 10 à 50 % en poids d'un pigment à effet spécial, de 1,0 à 10 % en poids d'un agent de mise en suspension de pigment choisi parmi un agent épaississant et un agent anti-sédimentation, de 40 à 70 % en poids d'eau et de moins de 1,0 % en poids d'un liant.

2. Ensemble selon la revendication 1, **caractérisé en ce que** ladite peinture à base d'eau est une peinture architecturale décorative.

3. Ensemble selon la revendication 1 ou 2, **caractérisé en ce que** ledit pigment à effet spécial est choisi dans le groupe constitué d'un pigment nacré, d'un pigment métallique, d'un pigment iridescent, d'un pigment de texture et d'un pigment velouté.

4. Ensemble selon la revendication 1, 2 ou 3,
**caractérisé en ce que** ledit composant de peinture à effet spécial contient moins de 0,5 % en poids de liant.

5. Ensemble selon l'une quelconque des revendications précédentes, **caractérisé en ce que** ledit composant de peinture à effet spécial et, de préférence, également les composants de peinture de types liant et épaississant, contiennent moins de 5 % en poids, de préférence moins de 1 % en poids de solvant organique.

6. Ensemble selon l'une quelconque des revendications précédentes, **caractérisé en ce que** ledit composant de peinture à effet spécial contient 1,0 à 3,0 % en poids dudit agent épaississant et 0,5 à 3,0 % dudit agent anti-sédimentation.

7. Ensemble selon l'une quelconque des revendications précédentes, **caractérisé en ce que** ledit composant de peinture à effet spécial contient également un ou plusieurs agents choisis parmi un agent mouillant à raison de 1,0 à 3,0 % en poids, un agent démoussant à raison de 0,1 à 1,5 % en poids et un biocide à raison de 0,1 à 1,0 % en poids.

8. Ensemble selon l'une quelconque des revendications 1 à 7, **caractérisé en ce que** ledit pigment à effet spécial est choisi dans le groupe constitué dudit pigment nacré, dudit pigment métallique, dudit pigment iridescent et dudit pigment de texture, et **en ce que** ledit composant de peinture à effet spécial contient 1,0 à 3,0 % en poids d'un dispersant.

9. Ensemble selon l'une quelconque des revendications 1 à 7, **caractérisé en ce que** ledit pigment à effet spécial est choisi dans le groupe constitué dudit pigment nacré, dudit pigment iridescent, dudit pigment de texture et dudit pigment velouté et **en ce que** ledit composant de peinture à effet spécial contient 0,05 à 0,5 % en poids d'un agent régulant le pH.

10. Ensemble selon l'une quelconque des revendications 1 à 7, **caractérisé en ce que** ledit pigment à effet spécial est choisi dans le groupe constitué dudit pigment nacré, dudit pigment métallique et dudit pigment iridescent et **en ce que** ledit composant de peinture à effet spécial contient 20 à 40 % en poids du pigment à effet spécial.

11. Ensemble selon l'une quelconque des revendications 1 à 7, **caractérisé en ce que** ledit pigment à effet spécial est choisi dans le groupe constitué dudit pigment de texture et dudit pigment velouté, et **en ce que** ledit composant de peinture à effet spécial contient 10 à 30 % en poids du pigment à effet spécial.

12. Ensemble selon l'une quelconque des revendications 1 à 10, **caractérisé en ce que** ledit pigment nacré est essentiellement constitué de particules de mica recouvertes de dioxyde de titane.

13. Ensemble selon l'une quelconque des revendications 1 à 8 et 10, **caractérisé en ce que** ledit pigment métallique est essentiellement constitué de paillettes d'acier inoxydable.

14. Ensemble selon l'une quelconque des revendications 1 à 9 et 11, **caractérisé en ce que** ledit pigment de texture est essentiellement constitué de particules de charges de taille grossière.

15. Ensemble selon la revendication 14, **caractérisé en ce que** lesdites particules de charges de taille grossière ont une taille de 100 à 300 µm.

16. Ensemble selon l'une quelconque des revendications 1 à 7, 9 et 11, **caractérisé en ce que** pigment velouté est essentiellement constitué de particules de charges extrêmement légères.

17. Ensemble selon la revendication 16, **caractérisé en ce que** lesdites particules de charges extrêmement légères ont une masse volumique apparente de 30 à 50 kg/m³ et un diamètre de particules de 20 à 80 µm.

18. Ensemble selon l'une quelconque des revendications 1 à 17, **caractérisé en ce que** l'agent épaississant dudit composant de peinture à effet spécial est choisi dans le groupe constitué d'un alcool polyvinylique, d'une émulsion soluble dans les alcalis modifiée par voie hydrophobe (HASE), une émulsion soluble ou gonflable dans les alcalis (ASE), un polymère d'oxyde d'éthylène et d'uréthanne modifié (HEUR) et un épaississant à base d'éther de cellulose.

19. Ensemble selon la revendication 18, **caractérisé en ce que** ledit agent épaississant est choisi dans le groupe constitué de ladite émulsion soluble dans les alcalis modifiée par voie hydrophobe (HASE), de ladite émulsion soluble ou gonflable dans les alcalis (ASE), dudit polymère d'oxyde d'éthylène et d'uréthanne modifié (HEUR) et dudit épaississant à base d'éther de cellulose.

20. Ensemble selon l'une quelconque des revendications 1 à 19, **caractérisé en ce que** l'agent anti-sédimentation dudit composant de peinture à effet spécial est choisi dans le groupe constitué de la silice fumée, de l'argile attapulgite, de l'argile colloïdale synthétique, et des agents chélatants à base de titanate.

21. Ensemble selon la revendication 20, **caractérisé en ce que** ledit agent anti-sédimentation est une argile colloïdale synthétique.

22. Ensemble selon l'une quelconque des revendications 1 à 21, **caractérisé en ce que** le composant de peinture de type épaississant dudit ensemble contient 5 à 20 % en poids d'un agent épaississant et 95 à 80 % en poids d'eau.

23. Ensemble selon la revendication 22, **caractérisé en ce que** ledit agent épaississant est choisi dans le groupe constitué d'un alcool polyvinylique, d'une émulsion soluble dans les alcalis modifiée par voie hydrophobe (HASE), d'une émulsion soluble ou gonflable dans les alcalis (ASE), d'un polymère d'oxyde d'éthylène et d'uréthanne modifié (HEUR) et d'un épaississant à base d'éther de cellulose.

24. Ensemble selon la revendication 23, **caractérisé en ce que** ledit agent épaississant est choisi dans le groupe constitué de ladite émulsion soluble dans les alcalis modifiée par voie hydrophobe (HASE), de ladite émulsion soluble ou gonflable dans les alcalis (ASE), dudit polymère d'oxyde d'éthylène et d'uréthanne modifié (HEUR) et dudit épaississant à base d'éther de cellulose.

25. Ensemble selon l'une quelconque des revendications 1 à 24, **caractérisé en ce que** ledit composant de peinture de type liant dudit ensemble contient 80 à 99 % en poids d'un liant et 20 à 1 % en poids d'eau.

26. Ensemble selon la revendication 25, dans lequel ledit liant est choisi dans le groupe constitué de polymères de latex dilués dans de l'eau.

27. Ensemble selon la revendication 26, **caractérisé en ce que** lesdits polymères de latex dilués dans de l'eau sont choisis dans le groupe constitué d'homo- et copolymères acryliques, de copolymères de styrène-butadiène et d'homo- et copolymères d'acétate de vinyle.

28. Ensemble selon la revendication 27, **caractérisé en ce que** ledit polymère de latex dilué dans de l'eau est un copolymère de styrène-acrylique.

29. Ensemble selon l'une quelconque des revendications 1 à 28, **caractérisé en ce que** ledit composant de peinture de type liant contient 0,05 à 0,5 % en poids d'un agent régulant le pH choisi parmi les composés d'ammonium et les composés aminés, de préférence des amino-alcools.

30. Ensemble selon l'une quelconque des revendications 1 à 29, **caractérisé en ce qu'**il comporte un ou plusieurs composants de peinture régulant la brillance.

31. Ensemble selon la revendication 30, **caractérisé en ce qu'**un composant de peinture régulant la brillance est un composant mat.

32. Ensemble selon la revendication 31, **caractérisé en ce que** le composant mat contient un mélange de différents types de charges qui rendent le film de peinture mat.

33. Ensemble selon la revendication 30, **caractérisé en ce qu'**un composant de peinture régulant la brillance est un composant non mat.

34. Ensemble selon la revendication 33, **caractérisé en ce que** le composant non mat contient des particules de kaolin, qui confèrent au film de peinture un aspect de type satiné ou brillant.

35. Ensemble selon l'une quelconque des revendications 1 à 34, **caractérisé en ce qu'**il comporte un composant de peinture opacifiant, qui contient un pigment opacifiant et de l'eau.

36. Ensemble selon la revendication 35, **caractérisé en ce que** ledit pigment opacifiant est choisi dans le groupe constitué du dioxyde de titane, du dioxyde de zinc, de dioxyde de plomb et d'un pigment polymère synthétique.

37. Ensemble selon la revendication 36, **caractérisé en ce que** ledit pigment opacifiant est de l'oxyde de titane ou un mélange de celui-ci.

38. Procédé de formation d'une peinture à base d'eau en fournissant un ensemble selon, l'une quelconque des revendications 1 à 37 et en mettant en contact au moins deux des composants de peinture à base d'eau de l'ensemble au point de vente, de distribution ou d'application, **caractérisé en ce que** l'on fournit et l'on met en contact ledit composant de peinture de type épaississant et ledit au moins un composant de peinture à effet spécial contenant un pigment à effet spécial.

39. Procédé selon la revendication 38, **caractérisé en ce que** lesdits composants de peinture à base d'eau sont distribués par une machine de distribution.

40. Procédé selon la revendication 38 ou 39, **caractérisé en ce que** 5 à 50 % en poids, par rapport au poids total de la peinture à base d'eau, dudit composant de peinture de type liant sont mis en contact.

41. Procédé selon la revendication 38, 39 ou 40, **caractérisé en ce que** 5 à 40 % en poids, par rapport au poids total de la peinture à base d'eau, dudit composant de peinture de type épaississant sont mis en contact.

42. Procédé selon l'une quelconque des revendications 38 à 41, **caractérisé en ce que** ledit pigment à effet spécial est choisi dans le groupe constitué dudit pigment nacré, dudit pigment métallique et dudit pigment de texture, et **en ce que** 10 à 50 % en poids, par rapport au poids total de la peinture à base d'eau, dudit composant de peinture régulant la brillance sont mis en contact.

43. Procédé selon la revendication 42, **caractérisé en ce que** l'on met séparément en contact 1 à 20 % en poids d'eau.

44. Procédé selon la revendication 38, 39 ou 40, **caractérisé en ce que** ledit pigment à effet spécial est choisi dans le groupe constitué dudit pigment de texture et dudit pigment velouté, et **en ce que** 5 à 20 % en poids dudit composant de peinture opacifiant sont mis en contact.

45. Utilisation de l'ensemble selon l'une quelconque des revendications 1 à 37 dans la préparation d'une peinture à base d'eau au point de vente, de distribution ou d'application.

46. Utilisation selon la revendication 45, **caractérisée en ce que** la peinture à base d'eau est une peinture architecturale décorative.
